# EUROPÄISCHE PATENTSCHRIFT

(11) **EP 2 063 362 B1**
(45) Veröffentlichungstag und Bekanntmachung des Hinweises auf die Patenterteilung: **25.12.2013**
(21) Anmeldenummer: 08017434.5
(22) Anmeldetag: 04.10.2008
(51) Int. Cl.: G06F 13/38, G01F 1/00, G01R 31/00

(54) **Vorrichtung zur Datenaufzeichnung für ein Meßgerät und Meßsystem**
Device for recording files for a measuring device and measuring system
Dispositif d'enregistrement de données pour un appareil de mesure et système de mesure

(30) Priorität: 20.11.2007 DE 102007055556
(43) Veröffentlichungstag der Anmeldung: 27.05.2009
(73) Patentinhaber: KROHNE MESSTECHNIK GMBH & CO. KG, 47058 Duisburg (DE)
(72) Erfinder: Dabrowski, Markus, 47269 Duisburg (DE)
(74) Vertreter: Gesthuysen Patent- und Rechtsanwälte

(56) Entgegenhaltungen:
- WO-A1-2005/001395
- WO-A1-2006/133308

## Beschreibung

Die Erfindung betrifft eine Vorrichtung zur Datenaufzeichnung für ein Meßgerät, wobei das Meßgerät eine Meßgeräteelektronik mit einem internen Datenbus und mit einer Datenschnittstelle umfaßt, wobei die Vorrichtung wenigstens ein Speicherelement, wenigstens eine mit dem Speicherelement verbundene Recheneinheit und eine Datenschnittstelle umfaßt und wobei die Vorrichtung über ihre Datenschnittstelle und über die korrespondierende Datenschnittstelle des Meßgeräts mit dem Meßgerät verbindbar ist und Daten zwischen dem Meßgerät und der Vorrichtung austauschbar sind. Ferner betrifft die Erfindung auch ein Meßsystem mit einem Meßgerät und einer Vorrichtung zur Datenaufzeichnung, wobei das Meßgerät eine Meßgeräteelektronik mit einem internen Datenbus und mit einer Datenschnittstelle zum Zugriff auf den Datenbus sowie ein Gehäuse umfaßt, wobei das Gehäuse die Meßgeräteelektronik umschließt, wobei die Vorrichtung wenigstens ein Speicherelement, wenigstens eine mit dem Speicherelement verbundene Recheneinheit und eine Datenschnittstelle umfaßt und wobei die Vorrichtung über ihre Datenschnittstelle und über die korrespondierende Datenschnittstelle des Meßgeräts mit dem Meßgerät verbindbar ist und Daten zwischen dem Meßgerät und der Vorrichtung austauschbar sind.

WO 2006/133308 offenbart eine Multiprotokollschnittstelle zur Verbindung eines Computers mit einem Feldgerät.

Vorrichtungen zur Datenaufzeichnung für ein Meßgerät und Meßsysteme der in Rede stehenden Art sind seit längerem bekannt und werden in der industriellen Praxis üblicherweise zur Erfassung der von dem Meßgerät bereitgestellten Nutzdaten verwendet. Bei den Nutzdaten handelt es sich im Falle eines Temperaturmeßgeräts um die gemessene Temperatur, bei einem Massendurchflußmeßgerät um den erfaßten Massendurchfluß usw. Diese von dem Meßgerät bereitgestellten und von der Vorrichtung zur Datenaufzeichnung aufgenommenen Nutzdaten werden über die korrespondierenden Datenschnittstellen der Meßgeräteelektronik und der Vorrichtung zur Datenaufzeichnung übertragen, wobei diese Datenschnittstellen üblicherweise vollständig von dem über den internen Datenbus abgewickelten Datenaustausch zwischen den Komponenten der Meßgeräteelektronik entkoppelt sind. Dies wird unter anderem dadurch erreicht, daß die Datenschnittstellen entsprechend einer - standardisierten - Hardware- und/oder Softwarespezifikation ausgelegt werden (z. B. USB, RS-232 etc.).

Damit Daten über die vorgenannten, üblicherweise verwendeten Datenschnittstellen an die Vorrichtung zur Datenaufzeichnung übertragen werden können, muß das Meßgerät einen entsprechenden Dienst - üblicherweise realisiert durch eine Softwareroutine - anbieten und ausführen, damit die interessierenden Daten über die Datenschnittstelle ausgegeben werden. Vor diesem Hintergrund ist verständlich, daß allein der lesende Zugriff der Vorrichtung zur Datenaufzeichnung auf das Meßgerät - also die reine Beobachtung des Meßgeräts - das Meßgerät in seinem internen Ablauf beeinflußt, da das Meßgerät zur Bereitstellung der über die Schnittstelle angebotenen Daten instrumentiert werden muß. Der über eine vorgeschriebene Datenschnittstelle erfolgende lesende Zugriff auf das Meßgerät verändert die Funktionsweise des Meßgeräts im Vergleich zu dem unbeobachteten Zustand, da die zur Bereitstellung der Daten vorgesehenen Dienste z. B. in Abhängigkeit von der Abtastfrequenz mit wechselnder Häufigkeit aufgerufen werden müssen, was selbstverständlich auch den Ablauf und die Koordination anderer von dem Meßgerät durchzuführender Vorgänge beeinflußt.

Die Erfahrung zeigt, daß derartige Vorrichtungen zur Datenaufzeichnung insbesondere dann nachteilig sind, wenn sie zur Fehlerdiagnose herangezogen werden. In ausgedehnten vernetzten Prozeßleitsystemen, in denen Meßgeräte untereinander in vielfacher Verbindung stehen, wirkt sich die beschriebene Beobachtung auch nur eines Meßgeräts auf das zeitliche Zusammenspiel mehrerer zusammenhängender Komponenten aus, so daß die im beobachteten Zustand des Meßgeräts erfaßten Daten keine Zustandsbeschreibung des Systems im unbeobachteten Zustand geben.

Darüber hinaus ist die Diagnose eines Meßgeräts über die beschriebenen Datenschnittstellen nur eingeschränkt möglich, da eine Beurteilung der internen Vorgänge in der Meßgeräteelektronik praktisch nicht möglich ist.

Aufgabe der vorliegenden Erfindung ist es, die aufgezeigten Nachteile bei bekannten Vorrichtungen zur Datenaufzeichnung für ein Meßgerät und bei bekannten Meßsystemen - zumindest teilweise - zu vermeiden.

Die aufgezeigte Aufgabe ist erfindungsgemäß zunächst und im wesentlichen bei der in Rede stehenden Vorrichtung zur Datenaufzeichnung dadurch gelöst, daß die Vorrichtung über ihre Datenschnittstelle funktional beeinflussungsfrei auf den internen Datenbus des Meßgeräts lesend zugreifen kann, also eine Busbeobachtung durchführen kann. Wenn davon die Rede ist, daß der lesende Zugriff der Vorrichtung zur Datenaufzeichnung "funktional beeinflussungsfrei" erfolgt, dann ist damit gemeint, daß die Beobachtung des Meßgeräts - Lesen von Daten aus dem Meßgerät - die internen Abläufe des Meßgeräts bzw. der Meßgeräteelektronik nicht beeinflußt, insbesondere nicht so beeinflußt, daß der lesende Zugriff auf das Meßgerät in der Meßgeräteelektronik die Ausführung entsprechender Dienste zur Datenbereitstellung auslöst oder überhaupt notwendig macht. Durch den Zugriff auf den internen Datenbus des Meßgeräts wird ferner bewirkt, daß auf die internen "Rohdaten" des Meßgeräts bzw. der Meßgeräteelektronik zugegriffen werden kann, weshalb sich die erfindungsgemäße Vorrichtung zur Datenaufzeichnung nicht nur zur bekannten Erfassung von Nutzdaten eignet, sondern sich auch zur Fehlerdiagnose und Wartung einsetzen läßt.

Bei einer vorteilhaften Ausgestaltung der Erfindung ist die Vorrichtung zur Datenaufzeichnung insgesamt so eingerichtet, daß die über die Datenschnittstelle von dem Datenbus - also von dem internen Datenbus - des Meßgeräts ausgelesenen Daten auf dem Speicherelement abspeicherbar sind, womit eine Datenspeicherung realisiert ist. Die Vorrichtung kann dann beispielsweise dazu verwendet werden, eine Langzeit-Datenaufzeichnung zum Zwecke der Prozeßkontrolle vorzunehmen. Die Datenaufzeichnung kann aber auch zu Diagnosezwecken verwendet werden, um mögliche Fehlersituationen des Meßgeräts zu erkennen, wobei die Fehlerdiagnose auf unterster hardwaremäßiger und/oder softwaremäßiger Ebene der Meßgerätearchitektur stattfindet bzw. stattfinden kann, da die von der Vorrichtung zur Datenaufzeichnung aufgenommenen Daten direkt von dem internen Datenbus des Meßgeräts stammen.

Nach einer weiteren vorteilhaften Ausgestaltung der Erfindung ist bei der Vorrichtung zur Datenaufzeichnung vorgesehen, daß die über die Datenschnittstelle von dem Datenbus des Meßgeräts gelesenen Daten vor der Abspeicherung auf dem Speicherelement analysierbar sind, so daß also eine Datenanalyse vorgenommen wird. Darunter ist beispielsweise zu verstehen, daß die Vorrichtung die von dem internen Datenbus des Meßgeräts aufgenommenen Daten interpretiert - also beispielsweise Meßwerte von Steuerbefehlen unterscheidet - und nur selektiv bestimmte Daten abspeichert. Unter Datenanalyse wird auch verstanden, daß der von dem internen Datenbus des Meßgeräts aufgenommene Datenfluß auf bestimmte Datenmuster hin untersucht wird und nur diese Vorkommnisse aufgezeichnet werden.

Alternativ oder zusätzlich kann die Vorrichtung auch so ausgestaltet sein, daß die von dem Datenbus des Meßgeräts ausgelesenen Daten vor der Abspeicherung auf dem Speicherelement von der Recheneinheit transformiert werden, wodurch eine Datentransformation implementiert ist. Unter einer Datentransformation kann beispielsweise verstanden werden, daß die in einem ersten Datenformat erfaßten Daten in ein zweites Datenformat übertragen werden oder z. B. die in einem Protokoll eingebetteten Nutzdaten separiert werden.

Bei einem bevorzugten Ausführungsbeispiel der Erfindung ist das Speicherelement entnehmbar auf der Vorrichtung angeordnet, was den Vorteil mit sich bringt, daß zur Weiterverarbeitung der aufgezeichneten Daten nicht die gesamte Vorrichtung von dem Meßgerät getrennt werden muß, sondern es ist ausreichend, das Speicherelement von der Vorrichtung zur Datenaufzeichnung zu trennen, wobei das Speicherelement dann anderweitig durch eine geeignete Lesevorrichtung auslesbar ist. Besonders einfach gelingt die Datenübertragung dann, wenn das Speicherelement ein standardisierter Datenträger ist, wie zum gegenwärtigen Zeitpunkt beispielsweise eine Secure-Digital-Memory-Card (SD Card). Derartig flachförmig ausgebildete Datenträger lassen sich sehr platzsparend beispielsweise auf einer ebenen Platine in eine geeignete Halterung einstecken, schieben oder festklemmen. Auf diese Art und Weise kann die Vorrichtung insbesondere sehr flach ausgebildet werden, was eine platzsparende Montierung der Vorrichtung zur Datenaufzeichnung auf, an oder in dem Meßgerät begünstigt.

Bei einer besonders vorteilhaften Ausgestaltung der Erfindung ist durch Programmierung der Recheneinheit die Busbeobachtung und/oder die Datenspeicherung und/oder die Datenanalyse und/oder die Datentransformation veränderbar vorgebbar. Dies kann beispielsweise dadurch erfolgen, daß auf einem weiteren Speicherelement der Vorrichtung der die jeweilige Funktionalität implementierende Code abgelegt wird.

Bevorzugt erfolgt die Programmierung jedoch durch wenigstens eine auf der Speichereinheit hinterlegte Steueranweisung, die von der Recheneinheit gelesen und ausgeführt wird. Wenn davon die Rede ist, daß die Funktionalität der Vorrichtung zur Datenaufzeichnung mittels Programmierung "veränderbar vorgebbar" ist, dann ist damit ganz allgemein die Vorgabe einer beliebigen Funktionalität gemeint, die sich mit der hardwaremäßigen Ausstattung der Vorrichtung zur Datenaufzeichnung umsetzen läßt. Insbesondere betrifft dies jedoch die Frequenz der Meßwertaufnahme, die Selektion bestimmter aufzuzeichnender Daten und die Vorgabe des Datenformats, das erkannt oder auf dem Speicherelement letztlich zu hinterlegen ist.

Die eingangs aufgezeigte Aufgabe ist nach einer weiteren Lehre der Erfindung bei dem in Rede stehenden Meßsystem mit einem Meßgerät und einer Vorrichtung zur Datenaufzeichnung dadurch gelöst, daß die Vorrichtung zur Datenaufzeichnung so ausgestaltet ist, wie es gemäß der zuvor beschriebenen ersten Lehre der Erfindung vorgesehen ist. Das Meßgerät des Meßsystems zeichnet sich insbesondere dadurch aus, daß seine Meßgeräteelektronik eine Datenschnittstelle aufweist, die einen Zugriff auf den internen Datenbus der Meßgeräteelektronik erlaubt.

Gemäß einer vorteilhaften Ausgestaltung des Meßsystems sind das Meßgerät und die Vorrichtung zur Datenaufnahme lösbar miteinander verbindbar. Dies hat den Vorteil, daß das Meßgerät nur bedarfsweise mit der Möglichkeit einer lokalen Datenaufnahme ausgestattet werden kann. In vielen Anwendungsfällen, insbesondere bei Einsatz eines Meßgeräts in einem umfangreicheren Gesamtprozeß mit einer übergeordneten Prozeßleitung, ist eine dauerhafte, lokal mit dem Meßgerät verbundene Möglichkeit der Datenaufzeichnung mittels einer Vorrichtung zur Datenaufzeichnung überhaupt nicht notwendig, da die Meßdaten des Meßgeräts üblicherweise über eine andere, nicht auf den lokalen Datenbus zugreifende Datenschnittstelle erfolgt. Die Kosten zur Herstellung eines im Rahmen des erfindungsgemäßen Meßsystems einsetzbaren Meßgeräts unterscheiden sich deshalb kaum von den Kosten eines aus dem Stand der Technik bekannten Meßgeräts, daß keine auf den internen Datenbus der Meßgeräteelektronik zugreifende Datenschnittstelle aufweist.

Gemäß einer vorteilhaften Ausgestaltung der Erfindung sind die Meßgeräteelektronik und die Vorrichtung zur Datenaufzeichnung im Montagezustand im Gehäuse des Meßgeräts angeordnet, so daß auch die Vorrichtung zur Datenaufzeichnung von dem Gehäuse des Meßgeräts geschützt wird bzw. auch die Vorrichtung zur Datenaufzeichnung von der Außenwelt abgekapselt ist, so daß sich die durch das Gehäuse bewirkte Einsatzfähigkeit des Meßgeräts auch auf die Vorrichtung zur Datenverarbeitung erstreckt. Dies ist z. B. bei explosionsgefährdeten Umgebungen von Wichtigkeit, wenn das Gehäuse beispielsweise eine druckfeste Kapselung im Sinne des Explosionsschutzes darstellt (Ex-d).

Nach einer weiteren vorteilhaften Ausgestaltung der Erfindung weist das Gehäuse des Meßgeräts eine verschließbare Zugangsöffnung auf, über die die Vorrichtung zur Datenaufzeichnung mit der Meßgeräteelektronik verbindbar ist, wobei die Zugangsöffnung insbesondere auch im Montagezustand des Meßsystems bzw. des Meßgeräts zugänglich, insbesondere betätigbar ist. Damit ist gemeint, daß die Vorrichtung zur Datenaufzeichnung nicht nur bei offener Zugangsöffnung mit der Meßgeräteelektronik in Verbindung steht, sondern daß die Vorrichtung zur Datenaufzeichnung auch bei verschlossener Zugangsöffnung einsatzbereit mit der Meßgeräteelektronik verbunden sein kann. Auch hier ist es wiederum von besonderem Vorteil, daß sich eine besondere Schutzwirkung des Gehäuses auch auf die Vorrichtung zur Datenerfassung erstreckt.

Im einzelnen gibt es nun eine Vielzahl von Möglichkeiten, die erfindungsgemäße Vorrichtung zur Datenaufzeichnung und das erfindungsgemäße Meßsystems auszugestalten und weiterzubilden. Dazu wird verwiesen einerseits auf die den Patentansprüchen 1 und 6 nachgeordneten Patentansprüche, andererseits auf die folgende Beschreibung von Ausführungsbeispielen in Verbindung mit der Zeichnung. In der Zeichnung zeigen
- Fig. 1a, 1b: ein Ausführungsbeispiel einer erfindungsgemäßen Vorrichtung zur Datenaufzeichnung für ein Meßgerät in der Aufsicht,
- Fig. 2: ein Ausführungsbeispiel eines erfindungsgemäßen Meßsystems mit einem Meßgerät und einer Vorrichtung zur Datenaufzeichnung im montierten Zustand und
- Fig. 3: das Ausführungsbeispiel gemäß Fig. 2 eines erfindungsgemäßen Meßsystems mit von dem Meßgerät demontierter Vorrichtung zur Datenaufzeichnung.

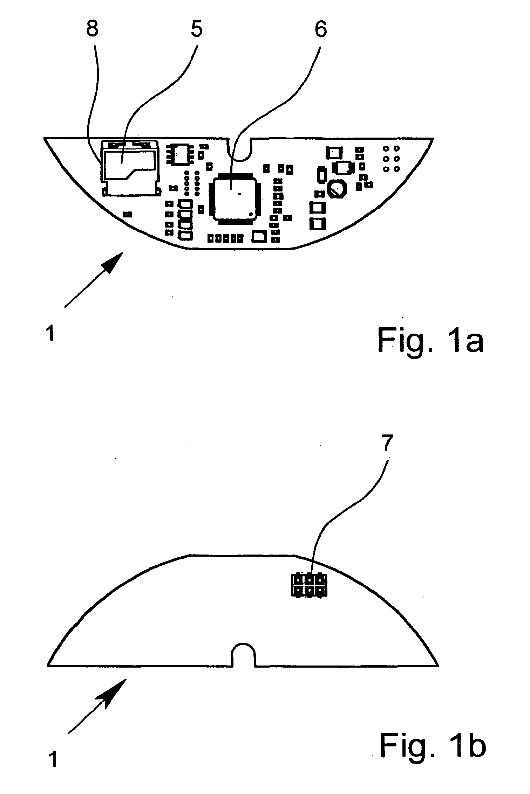

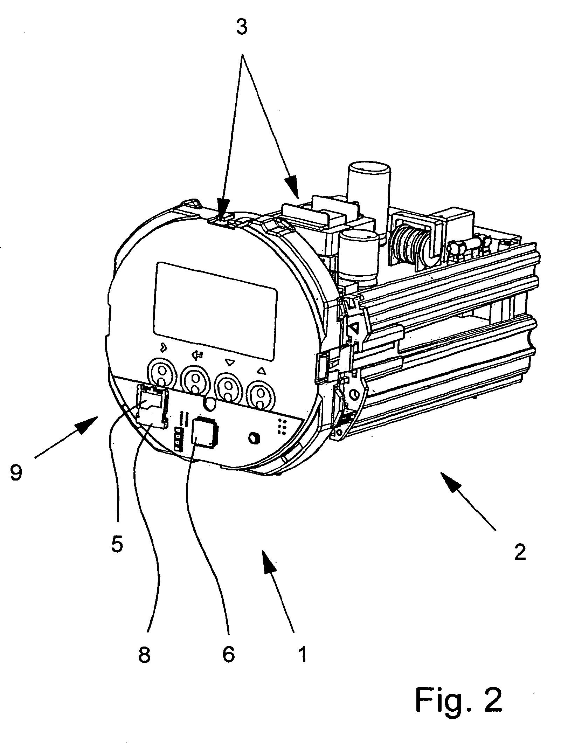

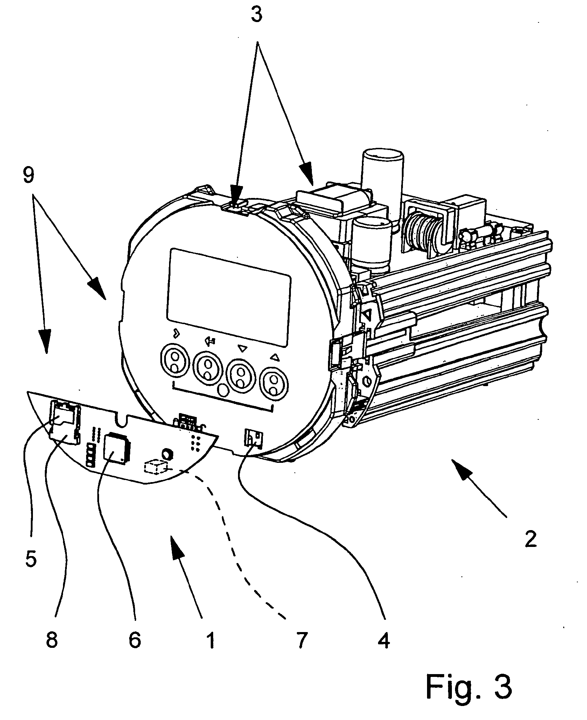

In den Fig. 1a und 1b ist eine Vorrichtung 1 zur Datenaufzeichnung für ein Meßgerät dargestellt, wobei das Meßgerät 2 lediglich in den Fig. 2 und 3 dargestellt ist. Das in den Fig. 2 und 3 dargestellte Meßgerät 2 ist der Teil eines Coriolis-Massendurchflußmeßgeräts, wobei zu dem vollständigen Meßgerät 2 noch weitere Teile gehören, wie z. B. ein Coriolis-Meßrohr und ein - ebenfalls nicht dargestelltes - Gehäuse.

Erkennbar ist jedenfalls die Meßgeräteelektronik 3 mit einem - nicht dargestellten - internen Datenbus und mit einer Datenschnittstelle 4. Wie auf allen drei Figuren zu erkennen ist, umfaßt die Vorrichtung 1 zur Datenaufzeichnung ein Speicherelement 5, eine mit dem Speicherelement 5 verbundene Recheneinheit 6 und eine Datenschnittstelle 7; die Verbindung zwischen dem Speicherelement 5 der Recheneinheit 6 und der Datenschnittstelle 7 ist in den Figuren nicht dargestellt.

Insbesondere in Fig. 3 ist zu erkennen, daß die Vorrichtung 1 zur Datenaufzeichnung über ihre Datenschnittstelle 7 und über die korrespondierende Datenschnittstelle 4 des Meßgeräts 2 mit dem Meßgerät 2 verbindbar ist und Daten zwischen dem Meßgerät 2 und der Vorrichtung 1 zur Datenaufzeichnung austauschbar sind. Die Vorrichtung 1 zeichnet sich dadurch aus, daß sie über ihre Datenschnittstelle 7 funktional beeinflussungsfrei auf den internen Datenbus des Meßgeräts 2 lesend zugreifen kann und damit eine Busbeobachtung des Meßgeräts 2 realisiert.

Durch den funktional beeinflussungsfreien Zugriff der Vorrichtung 1 zur Datenaufzeichnung auf den internen Datenbus des Meßgeräts 2, werden die internen Vorgänge des Meßgeräts 2 durch die Beobachtung nicht beeinflußt, was insbesondere zur Fehlerdiagnose vorteilhaft ist. Durch den direkten Zugriff auf den internen Datenbus des Meßgeräts 2 muß das Meßgerät 2 für die von der Vorrichtung 1 zur Datenaufzeichnung vorgenommene Messung nicht instrumentiert werden. Es ist auch nicht erforderlich, daß die Vorrichtung 1 zur Datenaufzeichnung irgendeine Art Kennung über die Datenschnittstelle 7 zu dem Meßgerät 2 überträgt, da die Vorrichtung 1 zur Datenaufzeichnung die Daten auf dem internen Datenbus des Meßgeräts 2 bzw. der Meßgeräteelektronik 3 beeinflussungsfrei abgreift.

Die auf den Fig. 1 bis 3 dargestellte Vorrichtung 1 zur Datenaufzeichnung ist so ausgestaltet, daß die über die Datenschnittstelle 7 von dem Datenbus des Meßgeräts 2 ausgelesenen Daten auf dem Speicherelement 5 abspeicherbar sind, womit folglich eine Datenspeicherung realisiert ist. Dabei können nicht nur besonders ausgewählte und interpretierte Daten auf dem Speicherelement 5 abgelegt werden, sondern auch die über den internen Datenbus des Meßgeräts 2 bzw. der Meßgerätelektronik 3 transportierten Rohdaten.

Gleichwohl ist die in den Figuren dargestellte Vorrichtung zur Datenaufzeichnung so ausgestaltet, daß die über die Datenschnittstelle 7 von dem Datenbus des Meßgeräts 2 ausgelesenen Daten vor der Abspeicherung auf dem Speicherelement 5 von der Recheneinheit 6 analysierbar und/oder transformierbar sind, die Vorrichtung 1 also eine Datenanalyse und/oder eine Datentransformation vornimmt. Im Rahmen der Datenanalyse filtert die dargestellte Vorrichtung 1 zur Datenaufzeichnung beispielsweise nur die Nutzdaten - im vorliegenden Fall also die Werte des Massendurchflusses - aus der Vielzahl von über den internen Datenbus der Meßgeräteelektronik 3 transportierten Daten. Im Rahmen der Datentransformation werden diese Rohdaten in ein anderes Datenformat umgewandelt, bevor sie abgespeichert werden.

Ferner ist das Speicherelement 5 auf der Vorrichtung 1 zur Datenaufzeichnung entnehmbar angeordnet. Genauer handelt es sich bei dem Speicherelement 5 in den Ausführungsbeispielen gemäß den Fig. 1 bis 3 um eine µSD-Karte (Micro Secure Digital Memory Card), die flächig auf der flächig ausgebildeten Leiterplatte aufliegt. Das Speicherelement 5 wird zunächst in eine auf der Leiterplatte vorgesehene Halterung 8 eingeschoben und dann mittels einer Halteklappe festgeklemmt. Das Speicherelement 5 kann so von der Vorrichtung 1 zur Datenaufzeichnung entnommen werden und beispielsweise in ein anderes Gerät zur Auswertung der aufgezeichneten Daten übertragen und ausgelesen werden.

Besonders vorteilhaft ist an den in den Fig. 1 bis 3 dargestellten Vorrichtungen 1 zur Datenaufzeichnung, daß durch Programmierung der Recheneinheit 6 die Busbeobachtung und die Datenspeicherung und die Datenanalyse und die Datentransformation veränderbar vorgebbar sind, wobei die Programmierung durch auf dem Speicherelement 5 hinterlegte Steueranweisungen erfolgt. Die Vorrichtung 1 zur Datenaufzeichnung überprüft also zunächst, ob auf dem Speicherelement 5 Daten zur Konfiguration der Vorrichtung 1 vorhanden sind bzw. ob entsprechende Steueranweisungen auf dem Speicherelement 5 hinterlegt sind und läßt diese Steueranweisungen durch die Recheneinheit 6 der Meßgeräteelektronik 3 ausführen.

Das in den Fig. 2 und 3 dargestellte Meßsystem 9 umfaßt ein Meßgerät 2 und eine Vorrichtung 1 zur Datenaufzeichnung, wobei das Meßgerät 2 eine Meßgeräteelektronik 3 mit einem internen Datenbus, der vorliegend nicht dargestellt ist, und eine Datenschnittstelle 4 zum Zugriff auf den Datenbus sowie ein Gehäuse umfaßt. Das hier nicht dargestellte Gehäuse umschließt die Meßgeräteelektronik 3.

Die Vorrichtung 1 umfaßt unter anderem ein Speicherelement 5, eine mit dem Speicherelement 5 verbundene Recheneinheit 6 und eine Datenschnittstelle 7, wobei die Vorrichtung 1 über ihre Datenschnittstelle 7 und über die korrespondierende Datenschnittstelle 4 des Meßgeräts 2 mit dem Meßgerät 2 verbindbar ist und Daten zwischen dem Meßgerät 2 und der Vorrichtung 1 austauschbar sind.

In den Fig. 2 und 3 ist die Vorrichtung 1 zur Datenaufzeichnung so ausgestaltet, wie dies zuvor auch anhand der Vorrichtung 1 zur Datenaufzeichnung gemäß Fig. 1 beschrieben worden ist. Vor allem kann also die Vorrichtung 1 zur Datenaufzeichnung über ihre Datenschnittstelle 7 funktional beeinflussungsfrei auf den internen Datenbus des Meßgeräts 2 lesend zugreifen. Wie anhand Fig. 3 zu erkennen ist, sind die Vorrichtung 1 zur Datenaufnahme und das Meßgerät 2 lösbar miteinander verbindbar, was den Vorteil mit sich bringt, daß das Meßgerät 2 auch nur bedarfsweise mit der Vorrichtung 1 zur Datenaufzeichnung ausgestattet werden kann.

Aufgrund der flachen Bauweise der Vorrichtung 1 zur Datenaufzeichnung ist es möglich, die Meßgeräteelektronik 3 und die Vorrichtung 1 zur Datenaufnahme im Montagezustand im nicht dargestellten Gehäuse des Meßgeräts 2 anzuordnen.

In dem dargestellten Ausführungsbeispiel ist das Meßsystem 9 so ausgestaltet, daß die Vorrichtung 1 zur Datenaufzeichnung mit der dazu notwendigen elektrischen Leistung von dem Meßgerät 2 versorgt wird. Die Leistungsversorgung geschieht im vorliegenden Fall über die korrespondierenden Datenschnittstellen 4, 7 der Vorrichtung 1 zur Datenaufzeichnung und des Meßgeräts 2. Dadurch wird erreicht, daß eine minimale Anzahl von Schnittstellen - insbesondere auch von mechanisch/elektrischen Schnittstellen - vorgesehen werden muß.

## Patentansprüche

1. Vorrichtung zur Datenaufzeichnung für ein Messgerät (2), wobei das Messgerät (2) eine Messgeräteelektronik (3) mit einem internen Datenbus und mit einer Datenschnittstelle (4) umfasst, wobei die Vorrichtung wenigstens ein Speicherelement (5), wenigstens eine mit dem Speicherelement (5) verbundene Recheneinheit (6) und eine Datenschnittstelle (7) umfasst und wobei die Vorrichtung über ihre Datenschnittstelle (7) und über die korrespondierende Datenschnittstelle (4) des Messgeräts (2) mit dem Messgerät (2) verbindbar ist und Daten zwischen dem Messgerät (2) und der Vorrichtung austauschbar sind,
**dadurch gekennzeichnet,**
**dass** die Vorrichtung über ihre Datenschnittstelle (7) funktional beeinflussungsfrei auf den internen Datenbus des Messgerät (2) lesend zugreifen kann und damit eine Busbeobachtung des Messgeräts realisiert.

2. Vorrichtung nach Anspruch 1, **dadurch gekennzeichnet, dass** die über die Datenschnittstelle (7) von dem Datenbus des Messgeräts (2) ausgelesenen Daten auf dem Speicherelement (5) abspeicherbar sind - Datenspeicherung -.

3. Vorrichtung nach Anspruch 2, **dadurch gekennzeichnet, dass** die über die Datenschnittstelle (7) von dem Datenbus des Messgeräts (2) ausgelesenen Daten vor der Abspeicherung auf dem Speicherelement (5) von der Recheneinheit (6) analysierbar - Datenanalyse - und/oder transformierbar - Datentransformation - sind.

4. Vorrichtung nach einem der Ansprüche 1 bis 3, **dadurch gekennzeichnet, dass** das Speicherelement (5) entnehmbar auf der Vorrichtung angeordnet ist, insbesondere steckbar, schiebbar oder klemmbar.

5. Vorrichtung nach einem der Ansprüche 1 bis 4, **dadurch gekennzeichnet, dass** durch Programmierung der Recheneinheit (6) die Busbeobachtung und/oder die Datenspeicherung und/oder die Datenanalyse und/oder die Datentransformation veränderbar vorgebbar ist, insbesondere hinsichtlich Häufigkeit, Auswahl und Datenformat, wobei die Programmierung insbesondere durch wenigstens eine auf dem Speicherelement (5) hinterlegte Steueranweisung erfolgt.

6. Messsystem mit einem Messgerät (2) und einer Vorrichtung (1) zur Datenaufzeichnung, wobei das Messgerät (2) eine Messgeräteelektronik (3) mit einem internen Datenbus und einer Datenschnittstelle (4) zum Zugriff auf den Datenbus sowie ein Gehäuse umfasst, wobei das Gehäuse die Messgeräteelektronik (3) umschließt, wobei die Vorrichtung (1) wenigstens ein Speicherelement (5), wenigstens eine mit dem Speicherelement (5) verbundene Recheneinheit (6) und eine Datenschnittstelle (7) umfasst und wobei die Vorrichtung (1) über ihre Datenschnittstelle (7) und über die korrespondierende Datenschnittstelle (4) des Messgerät (2) mit dem Messgerät (2) verbindbar ist und Daten zwischen dem Messgerät (2) und der Vorrichtung (1) austauschbar sind,
**dadurch gekennzeichnet,**
**dass** die Vorrichtung (1) zur Datenaufzeichnung die Merkmale des Kennzeichnungsteils einer der Ansprüche 1 bis 5 aufweist.

7. Messsystem nach Anspruch 6, **dadurch gekennzeichnet, dass** das Messgerät (2) und die Vorrichtung (1) zur Datenaufnahme lösbar verbindbar sind.

8. Messsystem nach Anspruch 6 oder 7, **dadurch gekennzeichnet, dass** die Messgeräteelektronik (3) und die Vorrichtung (1) zur Datenaufnahme im Montagezustand im Gehäuse des Messgeräts (2) angeordnet sind.

9. Messsystem nach einem der Ansprüche 6 bis 8, **dadurch gekennzeichnet, dass** das Gehäuse eine verschließbare Zugangsöffnung aufweist, über die die Vorrichtung (1) zur Datenaufzeichnung mit der Messgeräteelektronik (3) verbindbar ist, wobei die Zugangsöffnung insbesondere auch im Montagezustand des Messsystems bzw. des Messgeräts zugänglich, insbesondere betätigbar ist, wobei das Gehäuse insbesondere eine druckfeste Kapselung i. S. des Explosionsschutzes darstellt.

10. Messsystem nach einem der Ansprüche 6 bis 9, **dadurch gekennzeichnet, dass** die Vorrichtung (1) zur Datenaufzeichnung mit der notwendigen elektrisehen Leistung von dem Messgerät (2) versorgt wird, insbesondere über die korrespondierenden Datenschnittstellen (4, 7) der Vorrichtung (1) zur Datenaufzeichnung und des Messgeräts (2).

## Claims

1. Data-recording device for a measurement device (2), wherein the measurement device (2) contains measurement device electronics (3) having an internal data bus and a data interface (4), wherein the device includes at least one storage element (5), at least one processing unit (6) connected to the storage element (5) and a data interface (7) and wherein the device can be linked with the measurement device (2) via its data interface (7) and via the corresponding data interface (4) of the measurement device (2) and data can be exchanged between the measurement device (2) and the data-recording device,
**characterized in**
**that** the device can read-only access the internal data bus of the measurement device (2) without functional influence via its data interface (7) and thus implements a bus observation of the measurement device.

2. Device according to claim 1, **characterized in that** data read via the data interface (7) by the data bus of the measurement instrument (2) can be saved on the storage element (5) - data storage-.

3. Device according to claim 2, **characterized in that** data read via the data interface (7) by the data bus of the measurement instrument (2) can be analyzed - data analysis - and/or transformed - data transformation - by the processing unit (6) before being saved on the storage element (5).

4. Device according to any one of claims 1 to 3, **characterized in that** the storage element (5) is removably arranged on the device, in particular in a pluggable, slidable or clampable manner.

5. Device according to any one of claims 1 to 4, **characterized in that** by programming the processing unit (6), bus observation and/or data storage and/or data analysis and/or data transformation can be variably set, in particular in terms of frequency, selection and data format, wherein programming occurs, in particular, by means of at least one control statement saved on the storage element (5).

6. Measurement system having a measurement device (2) and an data-recording device (1), wherein the measurement device (2) contains measurement device electronics (3) having an internal data bus and a data interface (4) for access to the data bus as well as a housing, wherein the housing encloses the measurement device electronics (3), wherein the device (1) comprises at least one storage element (5), at least one processing unit (6) linked with the storage element (5) and a data interface (7), wherein the device (1) can be linked with the measurement device (2) via its data interface (7) and via the corresponding data interface (4) of the measurement device (2), and data can be interchanged between the measurement device (2) and the device (1), **characterized in**
**that** the data-recording device (1) has the features of the characterizing part of any one of claims 1 through 5.

7. Measurement system according to claim 6, **characterized in that** the measurement device (2) and the data-recording device (1) are removably attached.

8. Measurement system according to claim 6 or 7, **characterized in that** the measurement device electronics (3) and the data-recording device (1) are arranged in the housing of the measurement device (2) in the assembled state.

9. Measurement system according to any one of claims 6 to 8, **characterized in that** the housing has a closable access opening via which the data-recording device (1) can be connected to the measurement device electronics (3), wherein the access opening is accessible, in particular can be activated, in particular in the assembled state of the measurement system or of the measurement device, wherein the housing represents, in particular, a pressure-resistant casing in terms of explosion protection.

10. Measurement system according to any one of claims 6 to 9, **characterized in that** the data-recording device (1) is supplied with the necessary electrical power from the measurement device (2), in particular via the corresponding data interfaces (4, 7) of the data-recording device (1) and the measurement device (2).

## Revendications

1. Dispositif d'enregistrement de données pour un appareil de mesure (2), dans lequel l'appareil de mesure (2) comprend un système électronique d'appareil de mesure (3) comportant un bus de données interne et une interface de données (4), ledit dispositif comprenant au moins un élément de mémoire (5), au moins une unité de calcul (6) connectée à l'élément de mémoire (5) et une interface de données (7), et le dispositif pouvant être connecté par l'intermédiaire de son interface de données (7) et par l'intermédiaire de l'interface de données correspondante (4) de l'appareil de mesure (2) à l'appareil de mesure (2) et des données pouvant être échangées entre le dispositif de mesure (2) et le dispositif,
**caractérisé en ce que** le dispositif peut accéder en lecture par l'intermédiaire de son interface de données (7) sans influencer fonctionnellement l'appareil de mesure au bus de données interne (2), et **en ce qu'**il réalise ainsi une observation du bus de l'appareil de mesure.

2. Dispositif selon la revendication 1, **caractérisé en ce que** les données lues par l'intermédiaire de l'interface de données (7) du bus de données de l'appareil de mesure (2) peuvent être stockées dans l'élément de mémoire (5) - stockage des données.

3. Dispositif selon la revendication 2, **caractérisé en ce que** les données lues par l'intermédiaire de l'interface de données (7) du bus de données de l'appareil de mesure (2) peuvent être analysées - analyse des données - et/ou peuvent être transformées - transformation des données - par l'unité de calcul (6) avant le stockage dans l'élément de mémoire (5).

4. Dispositif selon l'une quelconque des revendications 1 à 3, **caractérisé en ce que** l'élément de stockage (5) est disposé de manière amovible sur le dispositif, notamment de manière enfichable, coulissante, ou pouvant être encliquetée.

5. Dispositif selon l'une quelconque des revendications 1 à 4, **caractérisé en ce que** l'observation du bus et/ou le stockage de données et/ou l'analyse des données et/ou la transformation des données peuvent être prédéterminées de manière modifiable par programmation de l'unité de calcul (6), notamment en ce qui concerne la fréquence, la sélection et le format des données, la programmation s'effectuant notamment par l'intermédiaire d'au moins une instruction de commande stockée dans l'élément de mémoire (5).

6. Système de mesure comportant un appareil de mesure (2) et un dispositif (1) d'enregistrement de données, l'appareil de mesure (2) comprenant une électronique d'appareil de mesure (3) comportant un bus de données interne et une interface de données (4) destinées à accéder au bus de données ainsi qu'un boîtier, le boîtier renfermant l'électronique d'appareil de mesure (3), le dispositif (1) comprenant au moins un élément de mémoire (5), au moins une unité de calcul (6) connectée à l'élément de mémoire (5) et une interface de données (7), et le dispositif (1) pouvant être connecté par l'intermédiaire de son interface de données (7) et par l'intermédiaire de l'interface de données correspondante (4) de l'appareil de mesure (2) à l'appareil de mesure (2) et des données pouvant être échangées entre le dispositif de mesure (2) et le dispositif (1),
**caractérisé en ce que** le dispositif (1) d'enregistrement de données présente les caractéristiques de l'une quelconque des revendications 1 à 5.

7. Système de mesure selon la revendication 6, **caractérisé en ce que** l'appareil de mesure (2) et le dispositif (1) d'enregistrement de données peuvent être connectés de manière amovible.

8. Système de mesure selon la revendication 6 ou 7, **caractérisé en ce que** l'électronique d'appareil de mesure (3) et le dispositif (1) d'enregistrement de données sont disposés à l'état monté dans le boîtier de l'appareil de mesure (2).

9. Système de mesure selon l'une quelconque des revendications 6 à 8, **caractérisé en ce que** le boîtier présente une ouverture d'accès verrouillable par l'intermédiaire de laquelle le dispositif (1) d'enregistrement de données peut être connecté au système électronique d'appareil de mesure (3), l'ouverture d'accès étant notamment également accessible, notamment actionnable, à l'état monté du système de mesure ou de l'appareil de mesure, le boîtier constituant notamment une encapsulation résistante à la pression au sens de la protection contre les explosions.

10. Système de mesure selon l'une quelconque des revendications 6 à 9, **caractérisé en ce que** le dispositif (1) d'enregistrement de données est alimenté avec l'énergie électrique nécessaire par l'appareil de mesure (2), notamment par l'intermédiaire de l'interface de données correspondante (4, 7) du dispositif (1) d'enregistrement de données et de l'appareil de mesure (2).
